# FASCICULE DE BREVET EUROPEEN

(11) **EP 3 586 271 B1**
(45) Date de publication et mention de la délivrance du brevet: **06.01.2021**
(21) Numéro de dépôt: 18709683.9
(22) Date de dépôt: 22.02.2018
(51) Int. Cl.: G06K 19/04, G06K 19/077, G06K 19/073, G11B 3/68, B29C 39/00, G11B 23/00, G11B 23/40

(54) **DISQUE DE SUPPORT D'ENREGISTREMENT CONNECTE**
VERBUNDENE AUFZEICHNUNGSMEDIUMPLATTE
CONNECTED RECORDING MEDIUM DISK

(30) Priorité: 22.02.2017 FR 1751401
(43) Date de publication de la demande: 01.01.2020
(73) Titulaire: MPO International, 53700 Averton (FR)
(72) Inventeur: DE MAGNIENVILLE, Sylvin, 53370 Saint-Pierre Des Nids (FR)
(74) Mandataire: Delorme, Nicolas
(86) Numéro de dépôt international: PCT/FR2018/050414
(87) Numéro de publication internationale: WO 2018/154240

(56) Documents cités:
- WO-A2-2004/097731
- US-A- 2 846 230
- US-A1- 2009 021 377
- US-A1- 2014 146 510

## Description

L'invention concerne un disque de support d'enregistrement connecté et son procédé de fabrication.

L'invention concerne plus particulièrement un disque microsillon dit « disque vinyle ».

Tel que décrit dans le document US 2 846 230 A, un disque microsillon présente généralement une première face et une seconde face qui comportent chacune une couche de lecture.

Chaque face du disque supporte une étiquette imprimée circulaire qui s'étend autour d'un trou ménagé au centre du disque.

Le procédé de fabrication d'un disque microsillon comporte notamment une étape de pressage qui consiste à presser disque vinyle en fusion dans une presse au moyen d'une matrice pour former le disque.

Les étiquettes sont généralement interposées entre la matrice et le disque vinyle en fusion au moment du pressage, de sorte que les étiquettes sont prises dans la matière qui constitue le disque.

Ainsi, la surface de l'étiquette affleure la surface du disque, sans former de surépaisseur.

Il est connu d'équiper un disque microsillon d'un dispositif de radio-identification pour transformer un simple disque en disque connecté.

Le dispositif de radio-identification, par exemple décrit dans le document WO 2004/097731 A2, permet, par exemple, à l'utilisateur de se connecter via un équipement de type ordiphone sur une plateforme dédiée qui propose d'écouter de la musique, de télécharger de la musique, d'accéder à des données sur l'artiste, de télécharger des coupons de réduction, etc.

La radio-identification est souvent désignée par le sigle RFID de l'anglais « Radio Frequency IDentification », et elle permet de mémoriser et récupérer des données à distance en utilisant un dispositif de radio-identification.

Parmi les dispositifs de radio-identification, on connait les dispositifs CCP pour « Communication en Champ Proche », aussi connus sous le sigle anglais NFC pour « Near Field Communication » et les dispositifs longue portée.

Le dispositif de radio-identification, aussi appelé « radio-étiquette », comporte une antenne associée à une puce électronique, ce qui permet au dispositif de radio-identification de recevoir des requêtes et de répondre aux requêtes radio émises depuis un émetteur-récepteur.

L'émetteur-récepteur est par exemple un terminal mobile comme un ordiphone ou une tablette tactile.

Pour équiper un disque d'un dispositif de radio-identification, on pourrait imaginer un dispositif de radio-identification qui se présente sous la forme d'un autocollant qui est collé sur l'étiquette du disque coté verso avant pressage.

Toutefois, ce type d'autocollant risque de ne pas résister aux conditions du procédé de fabrication des disques, notamment celles du pressage.

On pourrait également imaginer de fabriquer le disque de façon classique et de rajouter un dispositif de radio-identification par collage d'un autocollant sur l'étiquette du disque, coté recto, c'est-à-dire côté visible.

Mais le dispositif de radio-identification, étant saillant par rapport à l'étiquette et à la surface du disque, pourrait se décoller facilement, intentionnellement ou non.

De plus, d'un point de vue industriel, l'ajout d'un autocollant rapporté nécessite une étape de collage des autocollants sur l'étiquette du disque, avant ou après pressage, impliquant de modifier les machines de production.

La présente invention vise notamment à résoudre ces inconvénients et se rapporte pour ce faire à un disque de support d'enregistrement analogique, tel qu'un microsillon, qui présente au moins une première face comportant au moins une couche de lecture et au moins une première étiquette, caractérisé en ce qu'il comprend au moins un dispositif de radio-identification, le dispositif de radio-identification comprenant au moins une puce électronique sans contact qui est associée à une antenne, l'antenne étant imprimée directement sur une face de l'étiquette, et cette étiquette étant prise dans la matière qui constitue le disque.

Le disque selon l'invention permet d'avoir une intégration parfaite entre le dispositif de radio-identification, l'étiquette et le disque.

De plus, la fabrication d'un tel disque est économique et peu chronophage.

Du fait que l'étiquette est prise dans la matière du disque, il n'est pas nécessaire de la coller.

Selon une autre caractéristique, l'étiquette présente une face recto qui est visible par un utilisateur et une face verso qui est étendue sur la première face du disque, le dispositif de radio-identification étant agencé sur la face verso de l'étiquette.

Cette caractéristique permet au dispositif de radio-identification d'être protégé d'un côté par le substrat de l'étiquette, et de l'autre par le substrat vinyle.

Selon une autre caractéristique, le dispositif de radio-identification utilise une technologie de communication sans fil du type communication en champ proche.

Selon une autre caractéristique, le disque comprend une pluralité de dispositifs de radio-identification qui utilisent chacun une plage de fréquences radio différentes pour élargir les possibilités de communication avec le disque.

Cette caractéristique permet d'avoir plusieurs types de communication entre le disque et un terminal associé tels que le champ proche et la longue distance.

Selon une autre caractéristique, l'étiquette est une étiquette en papier.

L'étiquette papier permet l'impression d'un visuel sur la face recto de l'étiquette.

Selon une autre caractéristique, le disque comporte une seconde étiquette qui est agencée sur une face du disque opposée à la face qui porte la première étiquette, la seconde étiquette étant équipée d'un dispositif de radio-identification supplémentaire.

Cette caractéristique permet d'améliorer la communication entre le disque et un terminal associé.

Selon une autre caractéristique, le disque de support d'enregistrement est un disque microsillon.

Selon une autre caractéristique, le disque est équipé d'un étui de protection qui comporte au moins un écran de protection qui est adapté pour empêcher la communication sans contact entre le dispositif de radio-identification de l'étiquette et un dispositif extérieur.

L'invention concerne également un procédé de fabrication d'un disque du type décrit précédemment, le procédé comprend au moins :
- une étape de fabrication de l'étiquette qui comprend notamment une phase de dépose du dispositif de radio-identification sur l'étiquette qui consiste à imprimer l'antenne sur l'étiquette et à rapporter la puce sur l'antenne imprimée,
- une étape d'impression d'un visuel sur l'étiquette, et
- une étape de pressage du disque qui consiste à presser ensemble un substrat formant le disque et l'étiquette imprimée précédemment.

Le procédé selon l'invention permet d'imprimer les étiquettes par lots au moyen d'un outil d'impression standard et de fabriquer le disque au moyen d'un outil de production standard à la réalisation d'un disque microsillon.

Selon une autre caractéristique, le procédé comprend une étape de contrôle et d'initialisation du dispositif de radio-identification.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble de dessus, qui illustre un disque microsillon dont l'étiquette centrale est équipée de dispositifs de radio-identification, selon l'invention ;
- la figure 2 est une vue en coupe transversale suivant la ligne 2-2 de la figure 1, qui illustre le disque de la figure 1 ;
- la figure 3 est une vue de dessous, qui illustre les dispositifs de radio-identification imprimés sur l'étiquette de la figure 1 ;
- la figure 4 est une vue de détail, qui illustre un dispositif de radio-identification imprimé sur l'étiquette du disque de la figure 1 ;
- la figure 5 est une vue en perspective, qui illustre un étui de protection dans lequel est inséré le disque de la figure 1.

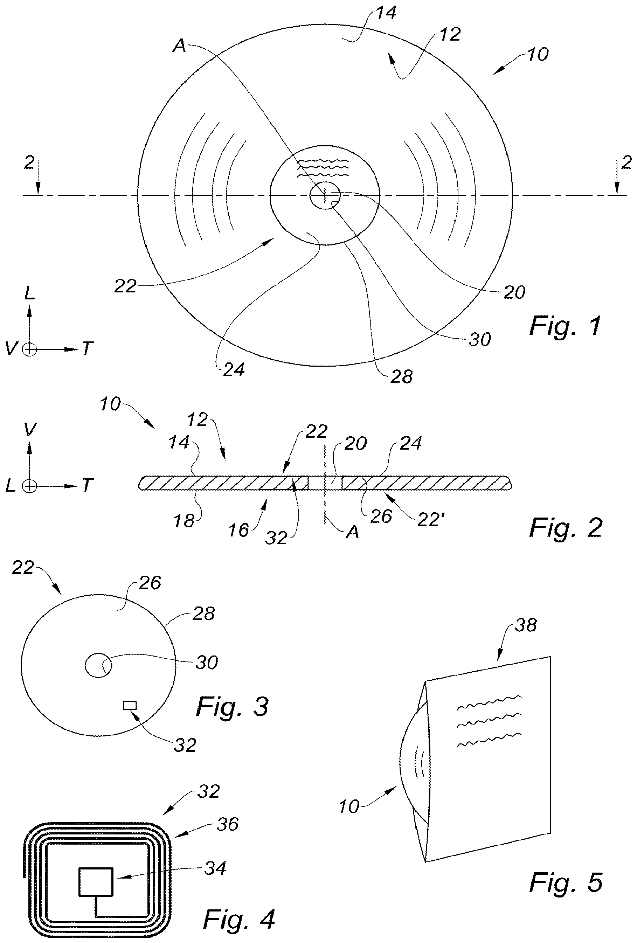

Dans la description et les revendications, on utilisera à titre non limitatif les expressions « supérieur », « inférieur » et leurs dérivés en référence à la partie supérieure et à la partie inférieure respectivement de la figure 1.

De plus, pour clarifier la description et les revendications, on adoptera à titre non limitatif la terminologie longitudinal, vertical et transversal en référence au trièdre L, V, T indiqué aux figures.

On a représenté à la figure 1 un disque 10 de support d'enregistrement qui s'étend dans un plan horizontal, c'est à dire suivant des directions longitudinale et transversale.

Le disque 10 présente une première face supérieure 12 qui comporte une première couche de lecture 14 et une seconde face inférieure 16 opposée qui présente une seconde couche de lecture 18.

Le disque 10 est un disque microsillon qui délimite en son centre un trou 20 destiné à coopérer avec un pion de centrage d'un tourne-disque (non représenté).

Comme on peut le voir aux figures 1 et 2, la face supérieure 12 du disque 10 supporte une première étiquette 22 qui s'étend autour du trou 20 central suivant un axe A vertical.

De même, la face inférieure 16 du disque 10 supporte une seconde étiquette 22' qui s'étend autour du trou 20 central suivant un axe A vertical.

La première étiquette 22 est une étiquette en papier de la forme d'un disque qui présente une première face recto 24 visible par l'utilisateur et une seconde face verso 26 plaquée contre la face supérieure 12 du disque 10.

Aussi, l'étiquette 22 est délimitée par un premier bord périphérique externe 28 et un second bord périphérique interne 30, chaque bord périphérique 28, 30 étant de forme circulaire autour de l'axe A central.

Conformément à l'invention, le disque 10 comprend un dispositif de radio-identification 32 qui est intégré sur la face verso 26 de l'étiquette 22.

Le dispositif de radio-identification 32, dont un est représenté en détail à la figure 4, comprend une puce électronique 34 sans contact qui est associée à une antenne 36.

L'antenne 36 est imprimée directement sur la face verso 26 de l'étiquette 22.

Selon un exemple de réalisation préféré, l'antenne 36 est imprimée sur l'étiquette 22 au moyen d'une encre adaptée, par exemple une encre à base d'argent.

Toutefois, le terme « imprimé » est à comprendre au sens large.

En effet, le terme « imprimé » signifie également que l'antenne 36 peut être imprimée par gravure par attaque acide à la manière de la réalisation d'un circuit imprimé, ou tout autre type d'impression ou de gravure.

Aussi, la puce électronique 34 est rapportée sur l'étiquette 22 de façon à être connectée sur l'antenne 36 imprimée.

Plus particulièrement, le dispositif de radio-identification 32 utilise une technologie de communication sans fil du type communication en champ proche.

La technologie de communication en champ proche est connue sous le sigle CCP pour « Communication en Champ Proche », et aussi sous le sigle anglais NFC pour « Near Field Commnuication ».

Le dispositif de radio-identification 32 est conçu pour recevoir des requêtes radio et pour répondre aux requêtes radio émises depuis un émetteur-récepteur (non représenté).

L'émetteur-récepteur est par exemple un terminal mobile comme un ordiphone ou une tablette tactile.

L'étiquette 22 du disque 10 selon l'invention constitue une « radio-étiquette » en tant que telle, c'est-à-dire que l'étiquette 22 constitue un dispositif de radio-identification en tant que tel.

En référence à la figure 5, le disque 10 est équipé d'un étui de protection 38 qui comporte deux écrans de protection (non représenté) adaptés pour empêcher la communication sans contact entre le dispositif de radio-identification 32 agencé sur l'étiquette 22 du disque 10 et un dispositif extérieur.

Les écrans de protection sont par exemple chacun formé par un film en aluminium, les écrans de protection couvrant chacun une grande face de l'étui de protection 38.

L'invention concerne également un procédé de fabrication du disque 10 précédemment décrit.

Le procédé de fabrication comprend essentiellement une étape de fabrication de l'étiquette 22 et une étape de pressage du disque 10.

L'étape de fabrication de l'étiquette 22 comprend notamment une première phase de dépose du dispositif de radio-identification 32 sur la face verso 26 de l'étiquette 22 qui consiste à imprimer l'antenne 36 sur l'étiquette 22 et à rapporter la puce 34 sur l'antenne 36 imprimée.

De plus, l'étape de fabrication de l'étiquette 22 comprend une seconde phase d'impression du visuel sur la face recto 24 de l'étiquette 22.

On notera que la seconde phase d'impression peut être réalisée avant la première phase de dépose du dispositif de radio-identification 32.

Toujours au cours de l'étape de fabrication de l'étiquette 22, l'étiquette est découpée dans sa forme finale de disque, au moyen d'un dispositif emporte-pièce par exemple.

Ensuite, l'étiquette est séchée au moyen d'un procédé standard d'étuvage.

L'étape de pressage du disque 10 est réalisée suivant un procédé standard, qui consiste à presser ensemble un substrat formant le disque 10 en fusion et les deux étiquettes 22, 22'.

Les étiquettes 22, 22' sont interposées entre les matrices et la matière en fusion au moment du pressage, de sorte que les étiquettes 22, 22' sont prises dans la matière qui constitue le disque 10: aucun collage n'est nécessaire.

Ainsi, la surface des étiquettes 22, 22' affleurent la surface du disque, sans former de surépaisseur.

Le procédé comporte une étape facultative de contrôle et d'initialisation des dispositifs de radio-identification 32, qui consiste à initialiser les dispositifs de radio-identification 32 au moyen d'un matériel de lecture-écriture adapté, pendant ou après la première phase de dépose du dispositif de radio-identification 32.

Le disque 10 selon l'invention offre une intégration parfaite du dispositif de radio-identification 32.

Cette intégration est obtenue grâce à la dépose du dispositif de radio-identification 32 sur l'étiquette 22 qui supporte les contraintes fortes de température durant l'étuvage de l'étiquette 22, et les contraintes fortes de pression, friction et température durant le pressage du disque 10.

Le dispositif de radio-identification 32 est parfaitement encapsulé, d'un côté par la face supérieure 12 du disque 10, et de l'autre côté par le substrat papier qui remplit une fonction de protection.

Toutefois, à titre non limitatif, la dépose du dispositif de radio-identification 32 peut être réalisée sur le côté recto 24 de l'étiquette 22.

De plus, le procédé de fabrication du disque 10 selon l'invention est compatible avec le procédé standard de fabrication des étiquettes et des disques microsillon, sans modification de l'outil de production et sans augmentation du temps de cycle de fabrication.

Enfin, le surcoût de fabrication du disque 10 selon l'invention par rapport à un disque microsillon « standard » est faible, il est lié au surcoût de la qualité du papier de l'étiquette 22 qui doit être apte à servir de substrat pour le dispositif de radio-identification et apte à supporter les contraintes de fabrication du disque vinyle, et au surcoût de la dépose du dispositif de radio-identification.

Selon une variante de réalisation de l'invention non représentée, le disque 10 comporte plusieurs dispositifs de radio-identification.

Par exemple, le disque 10 comporte un premier dispositif de radio-identification qui utilise la technologie de communication en champs proche et un second dispositif de radio-identification qui utilise une technologie de communication longue distance.

Selon cette variante de réalisation, les deux dispositifs de radio-identification utilisent des technologies différentes pour permettre au disque 10 de communiquer avec des applications différentes, le premier dispositif permettant, par exemple, de communiquer avec des applications de type NFC via ordiphone pour la relation avec le client, le second dispositif permettant de communiquer avec des applications de type gestion de stock, traçabilité, antivol.

Selon une autre variante de réalisation de l'invention non représentée, la première étiquette 22 et la seconde étiquette 22' du disque 10 comportent chacune un dispositif de radio-identification. Ces dispositifs de radio-identification pouvant utiliser des technologies de communication différentes.

## Revendications

1. Disque (10) de support d'enregistrement analogique qui présente au moins une première face (12) comportant au moins une couche de lecture (14) et au moins une première étiquette (22), **caractérisé en ce qu'**il comprend au moins un dispositif de radio-identification (32), le dispositif de radio-identification (32) comprenant au moins une puce électronique (34) sans contact qui est associée à une antenne (36), l'antenne (36) étant imprimée directement sur une face (26) de l'étiquette (22), et cette étiquette étant prise dans la matière qui constitue le disque.

2. Disque (10) de support d'enregistrement selon la revendication 1, **caractérisé en ce que** l'étiquette (22) présente une face recto (24) qui est visible par un utilisateur et une face verso (26) qui est étendue sur la première face (12) du disque (10), le dispositif de radio-identification (32) étant agencé sur la face verso (26) de l'étiquette (22).

3. Disque (10) de support d'enregistrement selon l'une quelconque des revendications précédentes, **caractérisé en ce que** le dispositif de radio-identification (32) utilise une technologie de communication sans fil du type communication en champ proche.

4. Disque (10) de support d'enregistrement selon l'une quelconque des revendications précédentes, **caractérisé en ce que** le disque (10) comprend une pluralité de dispositifs de radio-identification (32) qui utilisent chacun une plage de fréquences radio différentes pour élargir les possibilités de communication avec le disque (10).

5. Disque (10) de support d'enregistrement selon l'une quelconque des revendications précédentes, **caractérisé en ce que** l'étiquette (22) est une étiquette en papier.

6. Disque (10) de support d'enregistrement selon l'une quelconque des revendications précédentes, **caractérisé en ce que** le disque (10) comporte une seconde étiquette (22') qui est agencée sur une face du disque opposée à la face qui porte la première étiquette (22), la seconde étiquette (22') étant équipée d'un dispositif de radio-identification supplémentaire.

7. Disque (10) de support d'enregistrement selon l'une quelconque des revendications précédentes, **caractérisé en ce qu'**il est équipé d'un étui de protection (38) qui comporte au moins un écran de protection qui est adapté pour empêcher la communication sans contact entre le dispositif de radio-identification (32) de l'étiquette (22) et un dispositif extérieur.

8. Procédé de fabrication d'un disque (10) selon l'une quelconque des revendications précédentes, **caractérisé en ce qu'**il comprend au moins :
- une étape de fabrication de l'étiquette (22) qui comprend notamment une phase de dépose du dispositif de radio-identification (32) sur l'étiquette (22) qui consiste à imprimer l'antenne (36) sur l'étiquette (22) et à rapporter la puce (34) sur l'antenne (36) imprimée,
- une étape d'impression d'un visuel sur l'étiquette (22), et
- une étape de pressage du disque (10) qui consiste à presser ensemble un substrat formant le disque et l'étiquette (22) imprimée précédemment.

9. Procédé de fabrication selon la revendication 8, **caractérisé en ce qu'**il comprend une étape de contrôle et d'initialisation du dispositif de radio-identification (32).

## Patentansprüche

1. Analoge Aufzeichnungsträgerplatte (10) mit mindestens einer ersten Fläche (12), die mindestens eine Ausleseschicht (14) und mindestens ein erstes Etikett (22) aufweist, **dadurch gekennzeichnet, dass** sie mindestens eine Radioerkerkennungseinrichtung (32) aufweist, wobei die Radioerkennungseinrichtung (32) mindestens einen kontaktlosen Mikrochip (34) aufweist, der einer Antenne (36) zugeordnet ist, wobei die Antenne (36) direkt auf einer Fläche (26) des Etiketts (22) aufgedruckt ist und dieses Etikett in dem die Platte bildenden Material aufgenommen ist.

2. Aufzeichnungsträgerplatte (10) nach Anspruch 1, **dadurch gekennzeichnet, dass** das Etikett (22) eine Vorderseite (24) aufweist, die für einen Nutzer sichtbar ist, sowie eine Rückseite (26), die sich über die erste Fläche (12) der Platte (10) erstreckt, wobei die Radioerkennungseinrichtung (32) auf der Rückseite (26) des Etiketts (22) angeordnet ist.

3. Aufzeichnungsträgerplatte (10) nach einem der vorhergehenden Ansprüche, **dadurch gekennzeichnet, dass** die Radioerkennungseinrichtung (32) eine Drahtloskommunikationstechnik vom Typ Nahfeldkommunikation anwendet.

4. Aufzeichnungsträgerplatte (10) nach einem der vorhergehenden Ansprüche, **dadurch gekennzeichnet, dass** die Platte (10) mehrere Radioerkennungseinrichtungen (32) aufweist, die jeweils einen anderen Radiofrequenzbereich verwenden, um die Kommunikationsmöglichkeiten mit der Platte (10) zu erweitern.

5. Aufzeichnungsträgerplatte (10) nach einem der vorhergehenden Ansprüche, **dadurch gekennzeichnet, dass** das Etikett (22) ein Etikett aus Papier ist.

6. Aufzeichnungsträgerplatte (10) nach einem der vorhergehenden Ansprüche, **dadurch gekennzeichnet, dass** die Platte (10) ein zweites Etikett (22') aufweist, das auf einer Fläche der Platte angeordnet ist, die zu der Fläche entgegengesetzt ist, die das erste Etikett (22) trägt, wobei das zweite Etikett (22') mit einer zusätzlichen Radioerkennungseinrichtung ausgestattet ist.

7. Aufzeichnungsträgerplatte (10) nach einem der vorhergehenden Ansprüche, **dadurch gekennzeichnet, dass** sie mit einer Schutzhülle (38) ausgestattet ist, die zumindest eine Schutzabdeckung aufweist, die dazu geeignet ist, die kontaktlose Kommunikation zwischen der Radioerkennungseinrichtung (32) des Etiketts (22) und einer externen Vorrichtung zu verhindern.

8. Verfahren zur Herstellung einer Platte (10) nach einem der vorhergehenden Ansprüche, **dadurch gekennzeichnet, dass** es zumindest Folgendes umfasst:
- einen Schritt zur Herstellung des Etiketts (22), der insbesondere eine Phase zum Aufbringen der Radioerkennungseinrichtung (32) auf das Etikett (22) umfasst, die darin besteht, die Antenne (36) auf das Etikett (22) aufzudrucken und den Chip (34) auf die aufgedruckte Antenne (36) aufzusetzen,
- einen Schritt zum Aufdrucken einer Anzeigeeinrichtung auf das Etikett (22) und
- einen Schritt zum Pressen der Platte (10), der darin besteht, einen die Platte bildenden Träger und das zuvor gedruckte Etikett (22) zusammenzupressen.

9. Herstellungsverfahren nach Anspruch 8, **dadurch gekennzeichnet, dass** es einen Schritt zur Steuerung und Initialisierung der Radioerkennungseinrichtung (32) umfasst.

## Claims

1. An analog recording medium disc (10) that has at least one first face (12) including at least one read layer (14) and at least one first label (22), **characterized in that** it comprises at least one radio frequency identification device (32), the radio frequency identification device (32) comprising at least one contactless electronic chip (34) that is associated with an antenna (36), the antenna (36) being printed directly onto a face (26) of the label (22), and this label being held within the material that constitutes the disc.

2. The recording medium disc (10) according to claim 1, **characterized in that** the label (22) has a front face (24) which is visible by a user and a reverse face (26) which is extended over the first face (12) of the disc (10), the radio frequency identification device (32) being arranged on the reverse face (26) of the label (22).

3. The recording medium disc (10) according to any one of the preceding claims, **characterized in that** the radio frequency identification device (32) uses a wireless communication technology of the near field communication type.

4. The recording medium disc (10) according to any one of the preceding claims, **characterized in that** the disc (10) comprises a plurality of radio frequency identification devices (32) which each use a range of different radio frequencies to expand the possibilities of communication with the disc (10).

5. The recording medium disc (10) according to any one of the preceding claims, **characterized in that** the label (22) is a paper label.

6. The recording medium disc (10) according to any one of the preceding claims, **characterized in that** the disc (10) includes a second label (22') which is arranged on a face of the disc opposite to the face which carries the first label (22), the second label (22') being equipped with an additional radio frequency identification device.

7. The recording medium disc (10) according to any one of the preceding claims, **characterized in that** it is equipped with a protective case (38) which includes at least one protective screen which is adapted to prevent contactless communication between the radio frequency identification device (32) of the label (22) and an external device.

8. A method for manufacturing a disc (10) according to any one of the preceding claims, **characterized in that** it comprises at least:
- a step of manufacturing the label (22) which comprises in particular a phase of depositing the radio frequency identification device (32) on the label (22) which consists in printing the antenna (36) onto the label (22) and attaching the chip (34) on the printed antenna (36),
- a step of printing a visual on the label (22), and
- a step of pressing the disc (10) which consists in pressing together a substrate forming the disc and the previously printed label (22).

9. The manufacturing method according to claim 8, **characterized in that** it comprises a step of controlling and initializing the radio frequency identification device (32).
